# EUROPEAN PATENT SPECIFICATION

(11) **EP 4 357 736 B1**
(45) Date of publication and mention of the grant of the patent: **06.05.2026**
(21) Application number: 22824880.3
(22) Date of filing: 08.06.2022
(51) Int. Cl.: G01D 5/245, B25J 19/02, G01D 5/244, B25J 13/08

(54) **ANGLE DETECTING DEVICE**
WINKELERFASSUNGSVORRICHTUNG
DISPOSITIF DE DÉTECTION D'ANGLE

(30) Priority: 15.06.2021 JP 2021099722
(43) Date of publication of application: 24.04.2024
(73) Proprietor: NTN Corporation, Osaka-shi, Osaka 530-0005 (JP)
(72) Inventor: KOIKE, Takashi, Iwata-shi, Shizuoka 438-8510 (JP); FUKUSHIMA, Yasuyuki, Iwata-shi, Shizuoka 438-8510 (JP)
(74) Representative: Maikowski & Ninnemann Patentanwälte Partnerschaft mbB
(86) International application number: PCT/JP2022/023050
(87) International publication number: WO 2022/264888

(56) References cited:
- EP-A1- 2 116 813
- EP-A1- 2 244 069
- JP-A- 2009 080 058
- JP-A- 2012 141 259
- JP-A- 2015 075 466
- JP-A- 2015 129 679
- JP-A- H08 145 609
- JP-U- S5 572 164
- US-A1- 2003 052 667
- US-B1- 6 515 471

## Description

### CROSS REFERENCE TO THE RELATED APPLICATION

This application is based on and claims Convention priority to Japanese patent application No. 2021-099722, filed June 15, 2021, the entire disclosure of which is herein incorporated by reference as a part of this application.

### BACKGROUND OF THE INVENTION

### (Field of the Invention)

The present invention relates to an angle detecting device that detects a rotation angle of a rotation shaft or the like, and in particular, relates to an angle detecting device that detects an angle within a range of not larger than 360° at a high resolution in order to position a robot joint or the like at a target position.

### (Description of Related Art)

Various magnetic encoder devices that detect a rotation angle have been proposed.

For a magnetic encoder device disclosed in Patent Document 1, a cylindrical base portion is formed of a sintered metal and subjected to sizing in which the outer circumferential surface, the inner circumferential surface, and both end surfaces of the base portion are pressed. Furthermore, the resultant base portion is inserted into a mold, and a resin material having a thermoplastic resin and magnetic powder as main components is subjected to injection molding into a cavity. Then, the resultant molded portion is subjected to multipole magnetization so as to form thereon two rows of magnetic encoder tracks which each have a plurality of magnetic poles arrayed in the circumferential direction thereof, and between which the number of pairs of the magnetic poles differs.

The magnetic encoder having been thus produced is fixed to a rotary body, and a magnetic sensor is provided so as to be close to, and face, the magnetic encoder tracks. The magnetic sensor includes: two detecting elements facing the two respective rows of magnetic encoder tracks; and a calculator. The magnetic sensor calculates an absolute angle of the rotary body at a high resolution on the basis of the phase difference between magnetic signals detected by the two detecting elements, and outputs the absolute angle as a sensor output.

A magnetic encoder disclosed in Patent Document 2 is composed of: a magnetic recording rotary body having an outer circumferential surface on which a tape-like magnetic scale member magnetized so as to alternately have N poles and S poles at regular pitches has been pasted; and a magnetic information detecting means disposed so as to be close to the magnetic recording rotary body. The magnetic information detecting means includes two magnetic information detecting elements arranged at an interval along the rotation direction of the magnetic recording rotary body. Magnetic information formed on the magnetic scale member is detected by the two magnetic information detecting elements, and signals for an A phase, a B phase, and a Z phase are generated from outputs obtained through the detection. Consequently, a magnetic encoder that has high accuracy and high reliability and that is highly versatile can be comparatively inexpensively realized.

### [Related Document]

### [Patent Document]

[Patent Document 1] JP Laid-open Patent Publication No. 2015-75466
[Patent Document 2] JP Laid-open Patent Publication No. 2012-141259

### SUMMARY OF THE INVENTION

The technique disclosed in Patent Document 1 involves: molding a plastic magnet such that the magnet is integrated with a sintered core metal having been subjected to press work; and then performing magnetization so as to obtain a predetermined number of magnetization poles for each rotation.

A mass-produced product obtained by incorporating necessary functions into one package needs to be used as the magnetic sensor in order to realize a high-resolution angle detecting device in which a plurality of rows of magnetic encoders are used while satisfying constraint conditions regarding an available space, cost, and the like.

Thus, main specifications such as a magnetic pole width and the number of pairs of magnetic poles are predetermined, and adaptation to individual specifications is impossible. For example, when specifications such as a magnetic pole width and the number of pairs of magnetic poles are determined, the diameter of an encoder unit is determined according to these specifications. Thus, the encoder unit cannot be produced with an arbitrarily-determined diameter, whereby the degree of freedom in designing is restricted. In addition, since molding-finished products are individually magnetized one by one, it is difficult to improve productivity. Furthermore, it is difficult to integrate the molded product with the rotary body, and a product having finished being magnetized needs to be attached as a separate part. Thus, a problem arises also in that the rotary body is upsized, and the mass of the rotary body increases.

Moreover, a mold for the core metal and a mold for injection molding of the plastic magnet need to be manufactured in order to produce the magnetic encoder device. Thus, a problem arises in that production cost increases.

The tape-like magnetic scale used in the technique disclosed in Patent Document 2 has a low weight and does not require any mold or the like, and thus, can solve the above problems. However, Patent Document 2 does not contain any description regarding improvement of a resolution. In addition, although both ends of the magnetic scale member pasted over a portion of the circumference can be detected with the signal for the Z phase, the signal for the A phase or the B phase is not outputted in a state where the ends of the magnetic scale member are detected. Thus, a problem arises in that, for example, an ordinary control method cannot be employed when an angle detection signal is used for control of a rotating machine, or the like.

An object of the present invention is to solve the above problems and to provide a high-resolution angle detecting device based on the principle of a plurality of rows of magnetic encoders, the angle detecting device providing a high degree of freedom in designing, the angle detecting device enabling decrease in the size and the weight thereof, the angle detecting device enabling decrease in production cost therefor.

Hereinafter, in order to facilitate understanding of the present invention, the present invention will be described with reference to the reference numerals in embodiments for the sake of convenience.

An angle detecting device 4, 4A, 4B according to the present invention is an angle detecting device including: an encoder unit 6, 6A, 6B having a magnetic track on which N poles and S poles are alternately arrayed; and a magnetic sensor 7 facing the magnetic track with a gap δ interposed therebetween, wherein
the magnetic track has, when being expressed with a reference magnetic pole width P and a reference magnetic pole pair number n, a main track 2 having a magnetic pole width of P and a sub track 3 having a magnetic pole width of Pn/(n-1), the main track 2 and the sub track 3 being provided adjacent and parallel to each other along a longitudinal direction of a sheet-shaped encoder magnetic material 1,
the encoder unit 6, 6A, 6B is formed of the sheet-shaped encoder magnetic material 1 which has a length not larger than a reference length L=2Pn and which is wound around and fixed to an outer circumference portion or an inner circumference portion of a rotary body 5, 5A, 5B, and
the magnetic sensor 7 includes
   two magnetic detecting elements 8 each facing a corresponding one of the main track 2 and the sub track 3 and each configured to output a magnetic signal, and
   a calculator 9 configured to calculate an absolute angle of the rotary body 5, 5A, 5B on the basis of the magnetic signals from the magnetic detecting elements 8,
the angle detecting device 4, 4A, 4B further comprising a correction calculator 10 configured to multiply the calculated absolute angle by a correction coefficient based on a diameter of the encoder unit 6, 6A, 6B, to correct the absolute angle of the rotary body 5, 5A, 5B.

In this configuration, the sheet-shaped encoder magnetic material 1 is wound around and fixed to the outer circumference portion or the inner circumference portion of the rotary body 5, 5A, 5B and is used as the encoder unit 6, 6A, 6B of the angle detecting device 4, 4A, 4B. Thus, even when the diameter of the encoder unit is changed, it is unnecessary to manufacture a mold, whereby an encoder unit 6, 6A, 6B having an arbitrarily-determined diameter can be easily produced. The calculator 9 can calculate an absolute angle of the rotary body 5, 5A, 5B at a high resolution on the basis of the magnetic signals from the two magnetic detecting elements 8. The correction calculator 10 multiplies the calculated absolute angle by a correction coefficient based on the diameter of the encoder unit 6, 6A, 6B, and thus, even when the diameter of the encoder unit is not L/π, the absolute angle of the rotary body 5, 5A, 5B having a circumferential length of L can be accurately detected at a high resolution. In addition, when an existing rotary part 11A, 11B, 11C is used as the rotary body, it is unnecessary to add any encoder as a separate member, whereby the structure of the angle detecting device can be simplified, and the size and the weight of the angle detecting device can be decreased.

When the encoder magnetic material 1 having the reference length L is cut so as to have an arbitrarily-determined length and is wound around the outer circumference portion or the inner circumference portion of the rotary body 5, 5A, 5B so as to be formed as the encoder unit 6, 6A, 6B having a diameter S, the correction calculator 10 may use, as the correction coefficient, a value L/(πS) resulting from dividing the reference length L by a value resulting from multiplying the diameter S by a circle ratio π.

When the diameter of the encoder unit 6, 6A, 6B is the diameter S which is not equal to L/π, the sensor output outputted from the magnetic sensor 7 differs from the actual angle, but an accurate angle is obtained by multiplying the sensor output by L/(πS) as the correction coefficient.

The encoder unit 6, 6A, 6B may be formed of the encoder magnetic material 1 on which each of the main track 2 and the sub track 3 has a length L1 not larger than the reference length L, the encoder magnetic material 1 being wound around and fixed to the outer circumference portion or the inner circumference portion of the rotary body 5, 5A, 5B having a circumferential length larger than the length L1,
the angle detecting device 4, 4A, 4B further including:
a limit angle storage 12 configured to store therein limit angles corresponding to outputs, from the magnetic sensor 7, at both ends of the magnetic track; and
a detection range determinator 13 configured to determine whether or not the absolute angle outputted from the magnetic sensor 7 is within a range between the limit angles, the detection range determinator 13 being further configured to output an identification signal indicating whether or not deviation from between the limit angles has occurred.

In this configuration, when rotation is stopped at the time of outputting an identification signal indicating that deviation from between the limit angles has occurred, since an ordinary sensor signal indicating an absolute angle is outputted, an operation for avoiding a detection-disabled region can be performed through an ordinary control method.

The rotary body 5, 5A, 5B may be a rotary part 11A, 11B, 11C for a robot joint. In a case of detecting an absolute angle of a robot joint, an angle detection range of smaller than 360° is often required. In this case, when a seam of the encoder magnetic material 1 is located at a position at which angle detection is unnecessary, influence of the seam can be avoided, and the angle detecting device is realized. In addition, when the rotary part 11A, 11B, 11C for an existing robot joint is used as the rotary body and the encoder magnetic material 1 is directly wound around and fixed to the rotary part 11A, 11B, 11C, it is unnecessary to attach any encoder as a separate member, whereby the size and the weight of the robot joint can be decreased.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 shows a configuration example of an angle detecting device according to a first embodiment of the present invention;
Fig. 2 is a perspective view showing a structure of an encoder magnetic material of the angle detecting device;
Fig. 3 is a side view of the angle detecting device;
Fig. 4A is a block diagram of a control system of the angle detecting device;
Fig. 4B is a block diagram in which the control system in Fig. 4A is partially changed;
Fig. 5 shows the phases of detection signals from a magnetic sensor of the angle detecting device and the phase difference between both detection signals;
Fig. 6 shows a configuration example of an angle detecting device in a case where the diameter of an encoder unit differs from L/π;
Fig. 7 is a block diagram of a correction calculator of the angle detecting device;
Fig. 8 shows a configuration example of an angle detecting device in which a gap is formed in the encoder unit without any seam;
Fig. 9 is a block diagram of a control system of the angle detecting device; and
Fig. 10 shows an example in which any of the angle detecting devices is applied to a robot joint.

### DESCRIPTION OF EMBODIMENTS

### [First Embodiment]

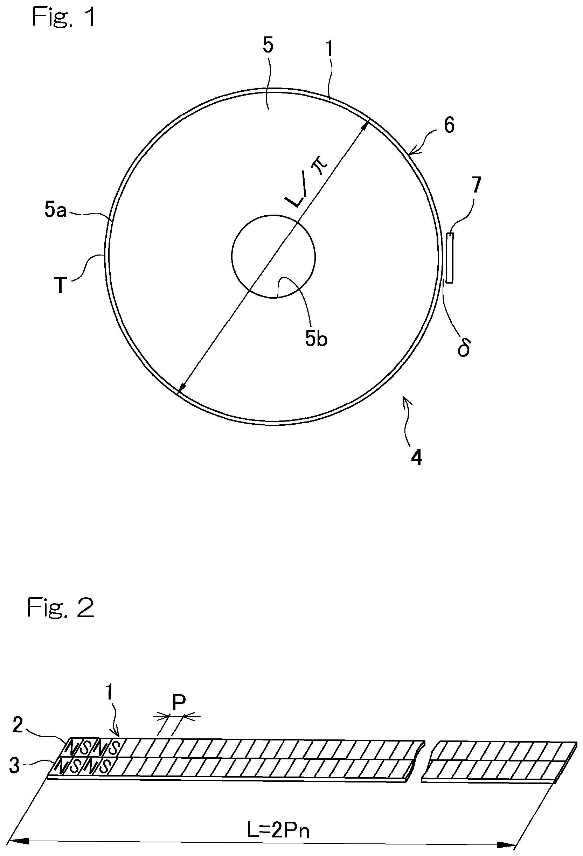

An angle detecting device according to an embodiment of the present invention will be described with reference to Fig. 1 to Fig. 5.

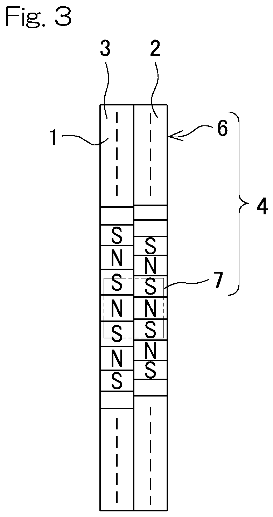

As shown in Fig. 1 and Fig. 3, an angle detecting device 4 includes: an encoder unit 6 having a magnetic track; and a magnetic sensor 7 facing the magnetic track with a gap δ interposed therebetween. As shown in Fig. 2, the encoder unit 6 has a magnetic track on which N poles and S poles are alternately arrayed. The magnetic track has, when being expressed with a reference magnetic pole width P and a reference magnetic pole pair number n, a main track 2 having a magnetic pole width (a width in a circumferential direction) of P and a sub track 3 having a magnetic pole width of Pn/(n-1), the main track 2 and the sub track 3 being provided adjacent and parallel to each other along a longitudinal direction of a sheet-shaped encoder magnetic material 1. As shown in Fig. 1, the encoder unit 6 is formed of the sheet-shaped encoder magnetic material 1 which has a length not larger than a reference length L and which is wound around and fixed to a cylindrical outer circumference portion 5a of a rotary body 5.

The encoder magnetic material 1 shown in Fig. 2 is produced as follows, for example. That is, a rubber material obtained by kneading magnetic powder is vulcanized into the shape of a sheet, and the sheet is cut so as to have a necessary length and then is magnetized so as to alternately form thereon N poles and S poles in the longitudinal direction at a predetermined magnetic pole width determined according to the reference magnetic pole width P and the reference magnetic pole pair number n, so that the magnetic track having the main track 2 and the sub track 3 is formed. Alternatively, a sheet that has a length satisfying a condition regarding, for example, availability of a raw material or production equipment and for which the process up to magnetization has been completed, may be cut so as to have a necessary length according to use. Here, L=2Pn is defined as the reference length.

For example, when the reference magnetic pole width P is 2 mm and the reference magnetic pole pair number n is 32 pairs of poles, a magnetization width (magnetization pitch) p₂ (=P) of the main track 2 is 2 mm and a magnetization width p₃ (=Pn/(n-1)) of the sub track 3 is 2.0645 mm. In a case of detecting an absolute angle of up to 360° with a standard accuracy of a magnetic sensor, a magnetization pole pair number (the number of pairs of magnetic poles) n₂ (=n) of the main track 2 is set to 32 pairs of poles (64 poles as the sum of the N poles and the S poles), and a magnetization pole pair number n₃ (=n-1) of the sub track 3 is set to 31 pairs of poles (62 poles as the sum of the N poles and the S poles). The length of the magnetic track in this case is the reference length L where L is 2Pn which equals 128 mm.

Although the encoder magnetic material 1 described here is such that the main track 2 has a magnetization width of 2 mm and 32 pairs of poles and the sub track 3 has a magnetization width of 2.0645 mm and 31 pairs of poles, the specifications regarding magnetic poles of the encoder magnetic material can be selected as appropriate according to the magnetic sensor to be used.

The angle detecting device 4 shown in Fig. 1 includes: the encoder unit 6 formed of the encoder magnetic material 1 adhered to or fixed by means of double-sided tape or the like to the outer circumference portion 5a of the rotary body 5; and the magnetic sensor 7. A hole 5b is formed at the center of the rotary body 5, and a rotation shaft (not shown) is inserted into the hole 5b so as not to be rotatable relative to the rotary body 5. The rotation shaft may be integrated with the rotary body 5. The term "integrated" means that the rotation shaft and the rotary body 5 are not formed as a plurality of elements joined together and are formed from a single material as a portion or the entirety of a single object through forging, machining, or the like, for example.

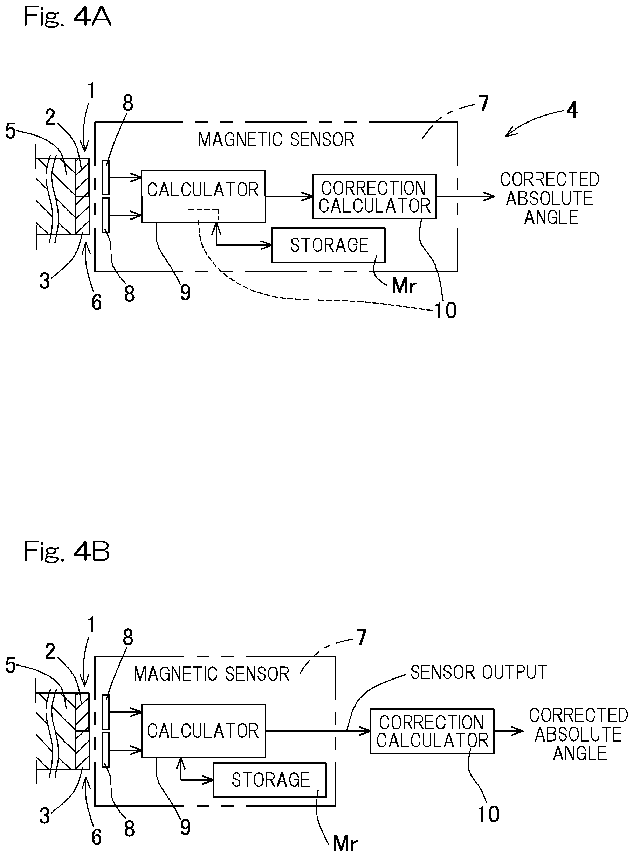

As shown in Fig. 4A, the magnetic sensor 7 includes: two magnetic detecting elements 8 which each face a corresponding one of the main track 2 and the sub track 3 from an outer side in the radial direction of the rotary body 5 and which each output a magnetic signal; and a calculator 9 which calculates an absolute angle of the rotary body 5 at a high resolution on the basis of the phase difference between the magnetic signals detected by the magnetic detecting elements 8 and outputs the absolute angle as a sensor output.

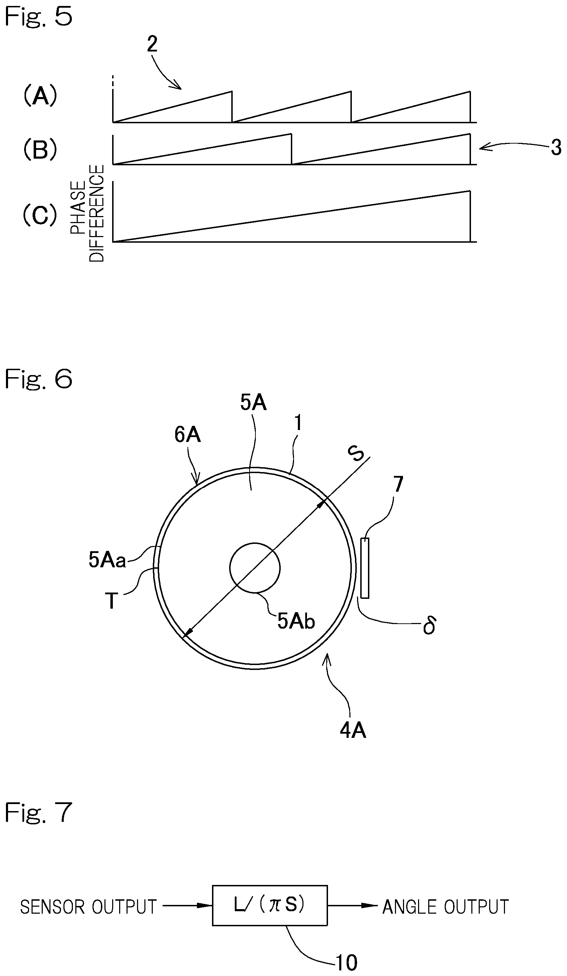

There is a case where the encoder magnetic material 1 having a length L and provided, over the entire length thereof, with the magnetic track having the reference length L as shown in Fig. 2 is wound by one turn on the outer circumference portion 5a of the rotary body 5 as in Fig. 1, to be made into the encoder unit 6 having a diameter of L/π. In this case, as shown in Fig. 4A and Fig. 5, the calculator 9 can detect an absolute angle with the standard accuracy by utilizing the fact that the phase difference (graph (C) of Fig. 5), between a signal (graph (A) of Fig. 5) obtained from the main track 2 and a signal (graph (B) of Fig. 5) obtained from the sub track 3, that is generated over one turn corresponds to one pair of poles.

Meanwhile, there is a case where the encoder magnetic material 1 provided with the magnetic track having the reference length L shown in Fig. 2 is cut so as to cause the length of the magnetic track to become shorter than the reference length L and is wound around the rotary body 5 shown in Fig. 1. In this case, even when a gap (a gap in the circumferential direction) is formed between one end and the other end in the longitudinal direction of the encoder unit 6 without any seam T therebetween, an absolute angle can be detected, in a range in which the encoder magnetic material 1 is fixed, with the standard accuracy of the magnetic sensor as long as the diameter of the encoder unit 6 is L/π.

Graph (A) of Fig. 5 shows the waveform of a detection signal corresponding to the main track 2, and graph (B) of Fig. 5 shows the waveform of a detection signal corresponding to the sub track 3. Graph (C) of Fig. 5 shows the waveform of an output signal indicating a phase difference obtained by the calculator 9 (Fig. 4A) on the basis of the detection signals in graphs (A) and (B) of Fig. 5. The calculator 9 (Fig. 4A) performs a process of converting the obtained phase difference into an absolute angle according to a preset calculation parameter. The calculation parameter is stored in, for example, a storage Mr such as a nonvolatile memory provided to the magnetic sensor 7 shown in Fig. 4A. In the storage Mr, information necessary for device operation such as the reference magnetic pole width P and the reference magnetic pole pair number n for the magnetic track, the magnetization pole pair number of each of the tracks 2 and 3, and a signal output method are stored in addition to the calculation parameter in a rewritable manner.

This angle detecting device 4 further includes a correction calculator 10 on a stage subsequent to the calculator 9. The correction calculator 10 multiplies the absolute angle outputted from the calculator 9 by a correction coefficient based on the diameter of the encoder unit 6, to correct the absolute angle of the rotary body 5.

When the encoder magnetic material 1 having the reference length L is cut so as to have an arbitrarily-determined length and is wound around the outer circumference portion 5a (Fig. 1) of the rotary body 5 so as to be formed as the encoder unit 6 having a diameter S, the correction calculator 10 uses, as the correction coefficient, a value L/(πS) resulting from dividing the reference length L by a value resulting from multiplying the diameter S by a circle ratio π.

When the diameter of the encoder unit 6 is not equal to L/π, the sensor output outputted from the magnetic sensor differs from the actual angle, but an accurate angle is obtained by multiplying the sensor output by the correction coefficient. When the diameter of the encoder unit 6 is defined as S as described above, the absolute angle outputted from the calculator 9 only has to be multiplied by the correction coefficient L/(πS). The correction calculator 10 includes a storage function of storing the correction coefficient and a calculation function and executes correction calculation according to the calculation function by using the stored correction coefficient. In this example, in the magnetic sensor 7, the correction calculator 10 is provided on the stage subsequent to the calculator 9. However, the correction calculator 10 may be provided in the calculator 9. Alternatively, as shown in Fig. 4B, the correction calculator 10 may be provided as a dedicated circuit near the magnetic sensor 7, or the correction calculator may be included in a higher-order control unit (not shown).

### <Operations and Effects>

In the angle detecting device 4 described above, the sheet-shaped encoder magnetic material 1 shown in Fig. 1 is wound around and fixed to the outer circumference portion 5a of the rotary body 5 and is used as the encoder unit 6 of the angle detecting device 4. Thus, even when the diameter of the encoder unit 6 is changed, it is unnecessary to manufacture a mold, whereby an encoder unit 6 having an arbitrarily-determined diameter can be easily produced. The calculator 9 can calculate an absolute angle of the rotary body 5 at a high resolution on the basis of the magnetic signals from the two magnetic detecting elements 8. The correction calculator 10 multiplies the calculated absolute angle by the correction coefficient based on the diameter of the encoder unit 6, and thus, even when the diameter of the encoder unit 6 is not L/π, the absolute angle of the rotary body 5 can be accurately detected at a high resolution. In addition, when an existing rotary part is used as the rotary body 5, it is unnecessary to add any encoder as a separate member, whereby the structure of the angle detecting device 4 can be simplified, and the size and the weight of the angle detecting device 4 can be decreased.

### <Other Embodiments>

Next, other embodiments will be described. In the following description, items corresponding to features antecedently described in each embodiment are denoted by the same reference numerals, and the same description therefor will not be repeated. In a case where only a portion of a configuration is described, the other portion of the configuration is the same as that antecedently described, unless otherwise stated. Identical configurations provide the same operations and effects. In addition to the combinations of items described specifically in each embodiment, it is also possible to partially combine the embodiments unless any problem is particularly posed due to the combination.

### [Second Embodiment]

Fig. 6 shows a configuration example of an angle detecting device 4A in a case where the diameter of the encoder unit differs from L/π. Fig. 7 is a block diagram of the correction calculator 10 of the angle detecting device.

When the encoder unit formed of the encoder magnetic material which has the reference length L and which is wound around the rotary body has a diameter different from L/π, the sensor output outputted from the magnetic sensor differs from the actual angle. In this case, an accurate absolute angle is obtained by providing the correction calculator 10 to the angle detecting device 4A and multiplying the sensor output by a correction coefficient.

Fig. 6 shows the angle detecting device 4A in which the encoder magnetic material 1 having the length L and provided, over the entire length thereof, with the magnetic track having the reference length L is cut so as to have a length of L/2 and is wound by one turn in the circumferential direction on an outer circumference portion 5Aa of a rotary body 5A so as to be formed as an encoder unit 6A which has a diameter L/(2π) and which can detect an absolute angle of up to 360°.

The length of the outer circumference of the encoder unit 6A is 1/2 of the reference length L, and thus a detection output indicating the absolute angle outputted from the magnetic sensor 7 takes a value that is 1/2 of the actual angle. Therefore, the actual absolute angle is obtained by providing the correction calculator 10 shown in Fig. 7 and multiplying the sensor output by a correction coefficient "2".

### [Third Embodiment]

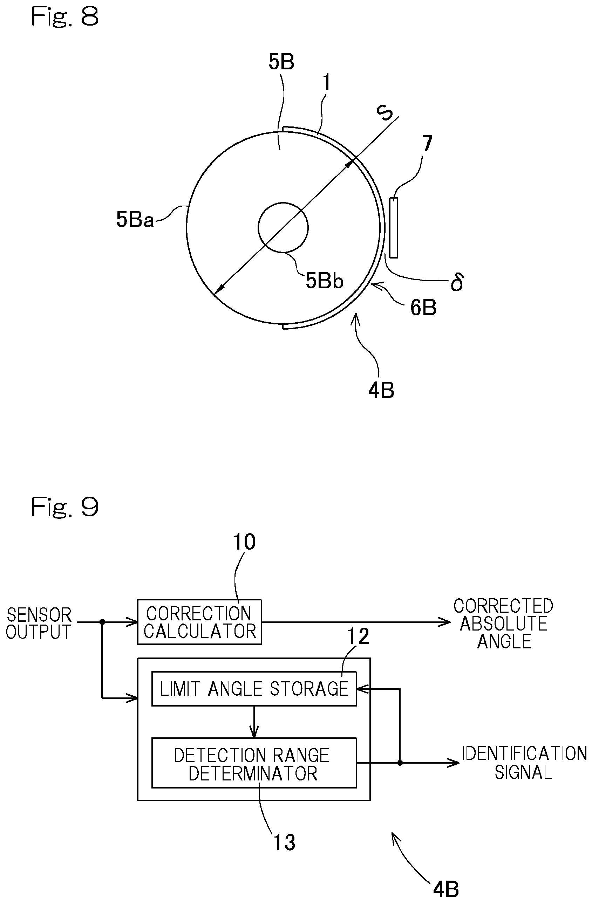

Fig. 8 shows an angle detecting device 4B in which: the encoder magnetic material 1 is wound around a portion of an outer circumference portion 5Ba of a rotary body 5B; and a large gap is present between one end and the other end in the longitudinal direction of an encoder unit 6B. Even when the diameter S of the encoder unit 6B is not L/π (S≠L/π), the actual absolute angle can be detected by performing correction calculation on the sensor output by the aforementioned correction calculator 10 in Fig. 7.

For example, in a case of detecting an absolute angle of a robot joint or the like, the necessary angle detection range is often narrower than a range corresponding to one rotation (360°), and a seam or a gap might be formed in the encoder magnetic material. In this case, when the seam or the gap in the encoder magnetic material is located at a position at which angle detection is unnecessary, it is possible to detect an absolute angle while avoiding influence of the seam or the gap.

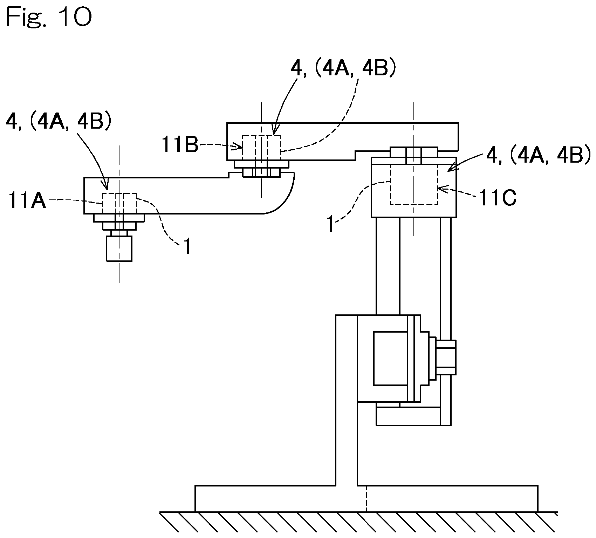

A robot joint shown in Fig. 10 is required to have a small size and a low weight. Considering this, the encoder magnetic material 1 (Fig. 2) is cut so as to have a necessary length, and then, with rotary parts 11A, 11B, and 11C such as annular parts of existing robot joints being used as rotary bodies, the encoder magnetic material 1 is directly wound around an outer circumference portion of each of the rotary parts 11A, 11B, and 11C, to be formed as the angle detecting device 4B. Consequently, it is unnecessary to attach any encoder as a separate member, whereby the size and the weight of the robot joint can be decreased.

When the magnetic track is shorter than the outer circumference portion 5Ba of the rotary body 5B as in the example in Fig. 8, both ends of the magnetic track need to be detected in order to avoid a situation in which: the magnetic track does not exist at a position facing the magnetic sensor 7; and the present position of the rotary body 5B cannot be detected. The angle detecting device 4B according to the present embodiment can detect an absolute angle just by powering on a power supply. Thus, as shown in Fig. 9, the angle detecting device 4B includes a limit angle storage 12 which stores therein angles (limit angles) outputted, from the magnetic sensor, at both ends of the magnetic track. The angle detecting device 4B further includes a detection range determinator 13 which determines, through comparison between the content in the limit angle storage 12 and the sensor output, whether or not the magnetic sensor is within a range between the limit angles, and which outputs an identification signal.

That is, the encoder unit 6B included in the angle detecting device 4B in Fig. 8 is formed of the encoder magnetic material 1 on which each of the main track and the sub track has a length L1 not larger than the reference length L, the encoder magnetic material 1 being wound around and fixed to the outer circumference portion 5Ba of the rotary body 5B having a circumferential length larger than the length L1. In this case, the angle detecting device 4B further includes: the limit angle storage 12 (in Fig. 9) which stores therein limit angles corresponding to outputs, from the magnetic sensor 7, at both ends of the magnetic track; and the detection range determinator 13 which determines whether or not the absolute angle outputted from the magnetic sensor 7 is within a range between the limit angles, and which outputs an identification signal indicating whether or not deviation from between the limit angles has occurred.

In this configuration, when rotation is stopped at the time of outputting an identification signal indicating that deviation from between the limit angles has occurred, since an ordinary sensor signal indicating an absolute angle has been outputted, an operation for avoiding a detection-disabled region can be performed through an ordinary control method. In addition, when the limit angles in the limit angle storage 12 are set in consideration of a margin of one to several pairs of magnetic poles from both ends of the magnetic track, the reliability of the operation can be increased.

The sheet-shaped encoder magnetic material may be wound around and fixed to the inner circumference portion of the cylindrical rotary body.

Each of the angle detecting devices can be used for not only robot joints but also, for example, wheel bearings, steering devices, precision positioning devices, working machines, industrial machines, and the like.

Although the present invention has been described above in connection with the preferred embodiments thereof with reference to the accompanying drawings, numerous additions, changes, and deletions can be made without departing from the gist of the present invention. Therefore, such additions, changes, and deletions are also construed as included within the scope of the present invention.

### [Reference Numerals]

1 ···· encoder magnetic material
2 ···· main track
3 ···· sub track
4, 4A, 4B ···· angle detecting device
5, 5A, 5B ···· rotary body
6, 6A, 6B ···· encoder unit
7 ···· magnetic sensor
8 ···· magnetic detecting element
9 ···· calculator
10 ···· correction calculator
11A, 11B, 11C ···· rotary part
12 ···· limit angle storage
13 ···· detection range determinator

## Claims

1. An angle detecting (4, 4A, 4B) device comprising:
an encoder unit (6, 6A, 6B) having a magnetic track on which N poles and S poles are alternately arrayed; and
a magnetic sensor (7) facing the magnetic track with a gap (δ) interposed therebetween, wherein
the magnetic track has, when being expressed with a reference magnetic pole width P and a reference magnetic pole pair number n, a main track (2) having a magnetic pole width of P and a sub track (3) having a magnetic pole width of Pn/(n-1), the main track (2) and the sub track (3) being provided adjacent and parallel to each other along a longitudinal direction of a sheet-shaped encoder magnetic material (1),
the encoder unit (6, 6A, 6B) is formed of the sheet-shaped encoder magnetic material (1) which has a length not larger than a reference length L=2Pn and which is wound around and fixed to an outer circumference portion or an inner circumference portion of a rotary body (5, 5A, 5B), and
the magnetic sensor (7) includes
two magnetic detecting elements (8) each facing a corresponding one of the main track (2) and the sub track (3) and each configured to output a magnetic signal, and
a calculator (9) configured to calculate an absolute angle of the rotary body (5, 5A, 5B) on the basis of the magnetic signals from the magnetic detecting elements (8),
the angle detecting device (4, 4A, 4B) further comprising a correction calculator (10) configured to multiply the calculated absolute angle by a correction coefficient based on a diameter of the encoder unit (6, 6A, 6B), to correct the absolute angle of the rotary body (5, 5A, 5B).

2. The angle detecting device (4, 4A, 4B) as claimed in claim 1, wherein
when the encoder magnetic material having the reference length L is cut so as to have an arbitrarily-determined length and is wound around the outer circumference portion or the inner circumference portion of the rotary body (5, 5A, 5B) so as to be formed as the encoder unit having (6, 6A, 6B) a diameter S, the correction calculator (10) uses, as the correction coefficient, a value L/(πS) resulting from dividing the reference length L by a value resulting from multiplying the diameter S by a circle ratio π.

3. The angle detecting device (4, 4A, 4B) as claimed in claim 1 or 2, wherein
the encoder unit is formed of the encoder magnetic material (1) on which each of the main track (2) and the sub track (3) has a length L1 not larger than the reference length L, the encoder magnetic material (1) being wound around and fixed to the outer circumference portion or the inner circumference portion of the rotary body (5, 5A, 5B) having a circumferential length larger than the length L1,
the angle detecting device (4, 4A, 4B) further comprising:
a limit angle storage (12) configured to store therein limit angles corresponding to outputs, from the magnetic sensor (7), at both ends of the magnetic track; and
a detection range determinator (13) configured to determine whether or not the absolute angle outputted from the magnetic sensor (7) is within a range between the limit angles, the detection range determinator (13) being further configured to output an identification signal indicating whether or not deviation from between the limit angles has occurred.

4. The angle detecting device (4, 4A, 4B) as claimed in any one of claims 1 to 3, wherein
the rotary body (5, 5A, 5B) is a rotary part for a robot joint.

## Patentansprüche

1. Winkel-Detektiervorrichtung (4, 4A, 4B), umfassend:
eine Encodereinheit (6, 6A, 6B) mit einer Magnetspur, auf der N-Pole und S-Pole abwechselnd angeordnet sind; und
einen Magnetsensor (7), der der Magnetspur mit einem dazwischenliegenden Spalt (δ) gegenüberliegt, wobei
die Magnetspur, wenn sie mit einer Referenz-Magnetpolbreite P und einer Referenz-Magnetpolpaarzahl n ausgedrückt wird, eine Hauptspur (2) mit einer Magnetpolbreite von P und eine Nebenspur (3) mit einer Magnetpolbreite von Pn/(n-1) aufweist, wobei die Hauptspur (2) und die Nebenspur (3) benachbart und parallel zueinander entlang einer Längsrichtung eines blattförmigen Encoder-Magnetmaterials (1) bereitgestellt sind,
die Encodereinheit (6, 6A, 6B) aus dem blattförmigen Encoder-Magnetmaterial (1) gebildet ist, das eine Länge nicht größer als eine Referenzlänge L=2Pn aufweist und das um einen Außenumfangsabschnitt oder einen Innenumfangsabschnitt eines Rotationskörpers (5, 5A, 5B) gewickelt und daran befestigt ist, und
der Magnetsensor (7) umfasst
zwei Magnetdetektionselemente (8), die jeweils einer entsprechenden von der Hauptspur (2) und der Nebenspur (3) gegenüberliegen und jeweils dazu ausgebildet sind, ein magnetisches Signal auszugeben, und
einen Rechner (9), der dazu ausgebildet ist, einen absoluten Winkel des Rotationskörpers (5, 5A, 5B) auf der Grundlage der magnetischen Signale von den Magnetdetektionselementen (8) zu berechnen,
wobei die Winkel-Detektiervorrichtung (4, 4A, 4B) ferner einen Korrekturrechner (10) umfasst, der dazu ausgebildet ist, den berechneten absoluten Winkel mit einem auf einem Durchmesser der Encodereinheit (6, 6A, 6B) basierenden Korrekturkoeffizienten zu multiplizieren, um den absoluten Winkel des Rotationskörpers (5, 5A, 5B) zu korrigieren.

2. Winkel-Detektiervorrichtung (4, 4A, 4B) nach Anspruch 1, wobei,
wenn das Encoder-Magnetmaterial mit der Referenzlänge L so geschnitten wird, dass es eine beliebig festgelegte Länge aufweist, und um den Außenumfangsabschnitt oder den Innenumfangsabschnitt des Rotationskörpers (5, 5A, 5B) gewickelt wird, um als die Encodereinheit (6, 6A, 6B) mit einem Durchmesser S ausgebildet zu werden, der Korrekturrechner (10) als den Korrekturkoeffizienten einen Wert L/(πS) verwendet, der sich aus dem Dividieren der Referenzlänge L durch einen Wert ergibt, der sich aus dem Multiplizieren des Durchmessers S mit einer Kreiszahl π ergibt.

3. Winkel-Detektiervorrichtung (4, 4A, 4B) nach Anspruch 1 oder 2, wobei
die Encodereinheit aus dem Encoder-Magnetmaterial (1) gebildet ist, auf dem jede der Hauptspur (2) und der Nebenspur (3) eine Länge L1 nicht größer als die Referenzlänge L aufweist, wobei das Encoder-Magnetmaterial (1) um den Außenumfangsabschnitt oder den Innenumfangsabschnitt des Rotationskörpers (5, 5A, 5B) mit einer Umfangslänge, die größer als die Länge L1 ist, gewickelt und daran befestigt ist, wobei die Winkel-Detektiervorrichtung (4, 4A, 4B) ferner umfasst:
einen Grenzwinkelspeicher (12), der dazu ausgebildet ist, darin Grenzwinkel zu speichern, die Ausgaben des Magnetsensors (7) an beiden Enden der Magnetspur entsprechen; und
einen Erkennungsbereichsbestimmer (13), der dazu ausgebildet ist, zu bestimmen, ob der vom Magnetsensor (7) ausgegebene absolute Winkel innerhalb eines Bereichs zwischen den Grenzwinkeln liegt oder nicht, wobei der Erkennungsbereichsbestimmer (13) ferner dazu ausgebildet ist, ein Identifikationssignal auszugeben, das anzeigt, ob eine Abweichung von zwischen den Grenzwinkeln aufgetreten ist oder nicht.

4. Winkel-Detektiervorrichtung (4, 4A, 4B) nach einem der Ansprüche 1 bis 3, wobei der Rotationskörper (5, 5A, 5B) ein Rotationsteil für ein Robotergelenk ist.

## Revendications

1. Dispositif de détection d'angle (4, 4A, 4B) comprenant :
une unité d'encodeur (6, 6A, 6B) ayant une piste magnétique sur laquelle des pôles N et des pôles S sont disposés alternativement ; et
un capteur magnétique (7) faisant face à la piste magnétique avec un entrefer (δ) interposé entre les deux, dans lequel
la piste magnétique, lorsqu'elle est exprimée avec une largeur de pôle magnétique de référence P et un nombre de paires de pôles magnétiques de référence n, comporte une piste principale (2) ayant une largeur de pôle magnétique de P et une piste secondaire (3) ayant une largeur de pôle magnétique de Pn/(n-1), la piste principale (2) et la piste secondaire (3) étant disposées adjacentes et parallèles l'une à l'autre le long d'une direction longitudinale d'un matériau magnétique d'encodeur en feuille (1),
l'unité d'encodeur (6, 6A, 6B) est formée du matériau magnétique d'encodeur en feuille (1) qui a une longueur ne dépassant pas une longueur de référence L=2Pn et qui est enroulé autour et fixé à une portion de circonférence extérieure ou à une portion de circonférence intérieure d'un corps rotatif (5, 5A, 5B), et
le capteur magnétique (7) comprend
deux éléments de détection magnétique (8) faisant chacun face à l'un correspondant de la piste principale (2) et de la piste secondaire (3) et chacun configuré pour délivrer un signal magnétique, et
un calculateur (9) configuré pour calculer un angle absolu du corps rotatif (5, 5A, 5B) sur la base des signaux magnétiques provenant des éléments de détection magnétique (8),
le dispositif de détection d'angle (4, 4A, 4B) comprenant en outre un calculateur de correction (10) configuré pour multiplier l'angle absolu calculé par un coefficient de correction basé sur un diamètre de l'unité d'encodeur (6, 6A, 6B), afin de corriger l'angle absolu du corps rotatif (5, 5A, 5B).

2. Dispositif de détection d'angle (4, 4A, 4B) selon la revendication 1, dans lequel
lorsque le matériau magnétique d'encodeur ayant la longueur de référence L est découpé de manière à avoir une longueur déterminée arbitrairement et est enroulé autour de la portion de circonférence extérieure ou de la portion de circonférence intérieure du corps rotatif (5, 5A, 5B) de manière à être formé comme l'unité d'encodeur (6, 6A, 6B) ayant un diamètre S, le calculateur de correction (10) utilise, comme coefficient de correction, une valeur L/(πS) résultant de la division de la longueur de référence L par une valeur résultant de la multiplication du diamètre S par un rapport du cercle π.

3. Dispositif de détection d'angle (4, 4A, 4B) selon la revendication 1 ou 2, dans lequel
l'unité d'encodeur est formée du matériau magnétique d'encodeur (1) sur lequel chacune de la piste principale (2) et de la piste secondaire (3) a une longueur L1 ne dépassant pas la longueur de référence L, le matériau magnétique d'encodeur (1) étant enroulé autour et fixé à la portion de circonférence extérieure ou à la portion de circonférence intérieure du corps rotatif (5, 5A, 5B) ayant une longueur circonférentielle supérieure à la longueur L1, le dispositif de détection d'angle (4, 4A, 4B) comprenant en outre :
un stockage d'angles limites (12) configuré pour stocker des angles limites correspondant à des sorties du capteur magnétique (7) aux deux extrémités de la piste magnétique ; et
un déterminateur de plage de détection (13) configuré pour déterminer si l'angle absolu délivré par le capteur magnétique (7) se situe ou non dans une plage comprise entre les angles limites, le déterminateur de plage de détection (13) étant en outre configuré pour délivrer un signal d'identification indiquant si une déviation par rapport à l'intervalle entre les angles limites est survenue ou non.

4. Dispositif de détection d'angle (4, 4A, 4B) selon l'une quelconque des revendications 1 à 3, dans lequel
le corps rotatif (5, 5A, 5B) est une partie rotative pour une articulation de robot.
